# EUROPÄISCHE PATENTSCHRIFT

(11) **EP 0 884 204 B1**
(45) Veröffentlichungstag und Bekanntmachung des Hinweises auf die Patenterteilung: **17.10.2001**
(21) Anmeldenummer: 98107084.0
(22) Anmeldetag: 17.04.1998
(51) Int. Cl.: B60H 1/00

(54) **Betätingungsvorrichtung**
Actuating device
Dispositif de commande

(30) Priorität: 11.06.1997 DE 19724684
(43) Veröffentlichungstag der Anmeldung: 16.12.1998
(73) Patentinhaber: Mannesmann VDO Aktiengesellschaft, 60388 Frankfurt am Main (DE)
(72) Erfinder: Modenbach, Thomas, 60443 Frankfurt (DE); Schiller, Werner, 64390 Erzhausen (DE); Stehle, Pierre, 61440 Oberursel (DE)
(74) Vertreter: Klein, Thomas, Dipl.-Ing. (FH)

(56) Entgegenhaltungen:
- DE-A- 19 548 593
- GB-A- 2 260 792

## Beschreibung

Die Erfindung betrifft eine Betätigungsvorrichtung nach dem Oberbegriff des Anspruchs 1.

Eine derartige Betätigungsvorrichtung ist aus dem Einsatz in Fahrzeugen verschiedenster Art als Heizungs- und Klimabetätigung mit als Drehschalter ausgebildetem Bedienungselement bekannt. Mit der Betätigungsvorrichtung wird über ein Übertragungselement üblicherweise die Stellung einer oder mehrerer in Luftkanälen angeordneter Luftklappen verändert, z. B. um eine gewünschte Temperatur der dem Fahrzeuginnenraum zugeführten Luft einzustellen oder um einen von mehreren Luftauslässen wie Fußraumauslaß, Windschutzscheibenauslaß, etc. auszuwählen, der mit anströmender Luft beaufschlagt werden soll. Die Luftklappen werden gewöhnlich mit Bowdenzügen betätigt, die es erfordern, dass die rotatorische Bewegung eines als Eingagsbedienelement vorgesehenen Drehschalters in eine translatorische Bewegung des Seilzugs umgesetzt wird.

Bei der bekannten Betätigungsvorrichtung ist der Drehschalter starr mit einer Trommel verbunden, durch die der erforderliche Bewegungsablauf des Bowdenzugs in Form einer in der Außenfläche der Trommel eingearbeiteten Nut vorgegeben ist. In der Nut ist ein Bolzen geführt, der an einem Ende eines zu der Trommelachse parallelen Bowdenzugs angeordnet ist. An seinem anderen Ende ist der Bowdenzug mit einer zu verstellenden Luftklappe verbunden. Durch ein Verdrehen der Trommel wird der Bowdenzug um einen bestimmten, von dem Verdrehwinkel und der Nutausbildung abhängigen Weg linear verschoben. Um eine zu starke Reibung, die eine Verstellung erschwert und den Seilzug verschleißt, des Bowdenzugs an dem ihn umgebenden Schlauch zu vermeiden, kann er sinnvoll nur in Richtung seiner Längserstreckung angesteuert werden. Das macht eine zu der Trommelachse parallele Anordnung des Bowdenzugs erforderlich. Eine solche Anordnung benötigt einen großen Bauraum, der in Fahrzeugen nur unter Kompromissen zur Verfügung steht. Ein freizügiger Einbau einer derartigen Betätigungsvorrichtung ist aufgrund der nur in engen Grenzen zu variierenden Einbaulage des Seilzugs nicht möglich.

Eine weitere Betätigungsvorrichtung gemäß dem Oberbegriff des Anspruchs 1 ist aus der GB 2260792 bekannt.

Der Erfindung liegt die Aufgabe zugrunde, eine Betätigungsvorrichtung, insbesondere für eine Heizungs- und/oder Klimatisierungseinrichtung, zu liefern, die sowohl ein geringes Bauvolumen aufweist als auch hinsichtlich ihrer Einbaulage nicht beschränkt ist. Gleichzeitig soll die Betätigung nur einen geringen Kraftaufwand erfordern und ruckfrei möglich sein.

Diese Aufgabe wird erfindungsgemäß durch die Betätigungsvorrichtung mit den Merkmalen des Anspruchs 1 gelöst.

Besonders einfach zu fertigen und in ein Fahrzeug einzubauen ist eine erfindungsgemäße Betätigungsvorrichtung, wenn die zweite Führung und/oder die dritte Führung fest mit dem Gehäuse verbunden ist. Auf diese Weise kann die Vorrichtung als Einbaueinheit vorgefertigt werden, und es ist möglich, eine hohe Paßgenauigkeit der Führungen zu erzielen und somit eine leichte und widerstandsfreie Verstellung zu gewährleisten. Eine exakte Herstellung der Führungen ist dann besonders einfach, wenn die Führung der Verstellwalze und/oder die zweite Führung und/oder die dritte Führung eine Führungskante aufweist. Um das Spiel zwischen Führungskante und Führungsstelle möglichst gering zu halten, ist es vorteilhaft, wenn die Führungskante ebenso wie die zugehörige Führungsstelle in etwa senkrecht zu der Bewegungsrichtung angeordnet ist. Vorzugsweise ist die Führung der Verstellwalze und/oder die zweite Führung und/oder die dritte Führung eine Führungsnut, so dass die jeweilige Führungsstelle sicher geführt und nur in der vorgesehenen Bewegungsrichtung bewegbar ist.

Die Führung an der Mantelfläche der Verstellwalze kann spiralförmig ausgebildet sein, wobei nur ein begrenztes Verdrehen des Eingabeelements zwischen zwei Anschlägen möglich ist, oder die Führung kann um die Walze geschlossen umlaufend ausgebildet sein. In letzterem Fall kann das Eingabeelement beliebig verdreht werden, wobei in wiederkehrenden Abständen gleiche Stellungen der Walze und des Stellelementes und somit auch des Übertragungselements durchlaufen werden. Je nach Verlauf und Ausbildung der Führung im Bereich der Mantelfläche der Verstellwalze ist die dritte Führung vorzugsweise eine Geradführung oder eine Kurvenführung.

Vorteilhaft ist die Bewegungsbahn der Befestigungsstelle für das Übertragungselement eine Gerade. Dann wird das Übertragungselement optimal linear angesteuert. Je nach Ausbildung des Übertragungselements kann es jedoch - ohne daß die Betätigungsvorrichtung ihre Funktionsfähigkeit vollständig verliert - auch zulässig sein, wenn die Bewegungsbahn der Befestigungsstelle für das Übertragungselement einen Bogen mit einem großen Radius beschreibt.

Die Exaktheit der Führung des Verstellelements wird vorzugsweise dadurch erhöht, daß es starr ausgebildet ist. Bevorzugt ist das Stellelement in etwa eben, womit sich das Bauvolumen der Betätigungsvorrichtung weiter verringern läßt. Vorteilhaft kann an dem Stellelement ein Anschlag vorgesehen sein, der z. B. gegen das Gehäuse wirkt und den Verstellweg des Stellelements begrenzt.

Die Befestigungsstelle für das Übertragungselement ist in besonders einfacher Weise ein in etwa senkrecht auf dem Stellelement angeordneter, einen abgerundeten Querschnitt aufweisender Zapfen. Auf diesem Zapfen kann ein ösenartiges Ende eines Übertragungselements einfach aufgesteckt werden. Ist die Befestigungsstelle für das Übertragungselement ein in etwa senkrecht auf dem Stellelement angeordneter Zapfen mit einer in etwa zentrischen Ausnehmung, die z. B. eine Mulde oder eine durchgehende Öffnung sein kann, so ist es möglich, ein hakenförmig ausgebildetes Ende des Übertragungselements in die Ausnehmung einfach einzuhängen. Denkbar ist eine Ausbildung der Befestigungsstelle für das Übertragungselement in der Form eines Schraubbolzens, der in das Stellelement eingesetzt wird. Jedoch kann die Befestigungsstelle auch ein einziges Bauteil bildend mit dem Stellelement verbunden sein, z. B. wenn dieses ein Kunststoffspritzteil ist.

Insbesondere wenn die Führungen als Nuten oder Führungskanten gestaltet sind, ist es von Vorteil, wenn die erste und/oder die zweite und/oder die dritte Führungsstelle des Stellelements ein in etwa senkrecht auf dem Stellelement angeordneter, einen abgerundeten Querschnitt aufweisender Zapfen ist. Aufgrund der Abrundung des Zapfens wird ein etwaiges Verkanten der Führungsstelle in oder an der Führung sicher vermieden.

Ein besonders günstiges Hebelverhältnis in der Betätigungsvorrichtung mit dem Ziel, eine große Stellkraft des Übertragungselements bei nur geringer Betätigungskraft des Eingabeelements zu erzeugen, kann dann erreicht werden, wenn die zweite Führungsstelle des Stellelements in einem Abstand von der Befestigungsstelle für das Übertragungselement angeordnet ist.

Der Aufbau der Betätigungsvorrichtung ist besonders einfach, wenn die erste Führungsstelle und die zweite Führungsstelle des Stellelements eine gemeinsame Achse aufweisen. Jedoch können die erste und die zweite Führungsstelle auch versetzt sein, wenn die Verstellwalze nicht senkrecht über der zweiten Führung angeordnet ist. Das bietet den Vorteil, daß die Walze einen besonders großen Durchmesser aufweisen kann, womit die Führung im Bereich der Mantelfläche der Walze länger ausgebildet werden kann. Eine längere Führung ermöglicht einen längeren Verstellweg des Übertragungselements und/oder eine exaktere Bedienbarkeit der Betätigungsvorrichtung.

Als Übertragungselement kann grundsätzlich jedes Element verwendet werden, das linear betätigbar ist. Jedoch ist es von besonderem Vorteil, wenn das Übertragungselement ein Bowdenzug ist, wie er z. B. zur Bedienung von Luftklappen in Luftkanälen von Heizungsanlagen in Kraftfahrzeugen vielfältig eingesetzt wird. Vorteilhaft kann das Übertragungselement auch ein Druckschalter sein, mit dem z. B. elektrische Einrichtungen wie motorische Antriebe ein- und ausgeschaltet werden können. In diesem Fall ist es hinreichend, wenn das Stellelement und der Druckschalter nicht aneinander befestigt sind, sondern an einer Betätigungsstelle des Stellelements lediglich zur Anlage kommen. Ist beabsichtigt, durch Verändern einer elektrischen Spannung z. B. einen elektromotorischen Antrieb eines Kompressors anzusteuern, so ist das Übertragungselement vorteilhaft ein Schiebepotentiometer.

Vorzugsweise weist die Betätigungsvorrichtung mehrere Stellelemente auf, mittels welcher jeweils ein Übertragungselement bewegbar ist, so daß mit einer Betätigung des Eingabeelements verschiedene Einrichtungen wie z. B. Luftklappen, deren Stellung zueinander in Abhängigkeit steht, verstellbar sind. Je nach Ausbildung der Stellelemente sowie der Führungen können die sich ergebenden Verstellwege der Einrichtungen dabei gleich oder unterschiedlich sein. Zum Beispiel kann es erwünscht sein, in einem Kraftfahrzeug Luft gleichzeitig aus Auslässen im Bereich der Windschutzscheibe und im Bereich der Seitenscheiben ausströmen zu lassen, um ein Beschlagen der Scheiben zu verhindern, wobei die anteilsmäßige Aufteilung der ausströmenden Luft auf die verschiedenen Auslässe abhängig von der Stellung des Eingabeelements ist. Insbesondere wenn die verschiedenen zu verstellenden Einrichtungen unterschiedliche Verstellwege aufweisen, ist es von Vorteil, wenn die Verstellwalze mehrere Führungen aufweist, um mit jeweils einer Führung ein Stellelement anzusteuern.

Es ist denkbar, die Verstellwalze einstückig, z. B. als ein in einem Verfahrensgang hergestelltes Kunststoffspritzteil, zu fertigen. Jedoch ist es dann aufgrund der zu ermöglichenden Entformung notwendig, die Führungen der Walze mit schrägen Flanken zu versehen, was das Spiel zwischen Walzenführung und Führungsstelle des Stellelements unerwünscht erhöht und die Bedienbarkeit der Betätigungsvorrichtung erheblich verschlechtert. Zudem bilden Spritzgrate Hindernisse und Widerstände für den Lauf der Führungsstelle des Stellelements an der Führung der Verstellwalze. Dadurch ist eine Betätigung mit gleichmäßiger Betätigungskraft nicht möglich. Um hier Abhilfe zu schaffen, besteht die Verstellwalze aus mindestens zwei Walzenbauteilen, die zusammensetzbar, insbesondere zusammenfügbar, sind. Durch die so erreichbare hohe Maßhaltigkeit der Führung über die gesamte Führungskurve und den Entfall von Graten an den Führungen ist die Bedienung der Betätigungsvorrichtung sehr komfortabel. Besonders einfach ist es, wenn die Walzenbauteile miteinander verklebbar oder verklipsbar sind. Es ist jedoch auch vorstellbar, daß die Walzenbauteile zusammenfügbar und unter Spannung in dem Gehäuse halterbar sind. Auf diese Weise läßt sich der Fertigungsgang des festen Verbindens, das z. B. auch ein Verschweißen sein kann, der Walzenbauteile einsparen.

Da Luftklappen in Luftkanälen oft in schwer zugänglichen und/oder in von einer gewünschten Bedienposition weit entfernten Bereichen angeordnet sind und das Übertragungselement somit eine erhebliche Länge aufweisen kann, die im Fall von Bowdenzügen aufgrund hoher Reibungsverluste einen merklichen Mehraufwand an Bedienkraft erfordert, ist es von besonderem Vorteil, wenn mit der Betätigungsvorrichtung eine Luftklappe in einem Luftkanal betätigbar ist.

Die Erfindung wird im folgenden anhand von in der beigefügten Zeichnung dargestellten Ausführungsbeispielen näher erläutert. Es zeigt:
- Figur 1: eine erfindungsgemäße Betätigungsvorrichtung in Explosionsdarstellung,
- Figur 2: die Betätigungsvorrichtung aus Figur 1 ohne Verstellwalze in einer Ansicht von oben,
- Figur 3: verschiedene Positionen eines Stellelements einer erfindungsgemäßen Betätigungsvorrichtung in einer Ansicht von oben und
- Figur 4: eine weitere erfindungsgemäße Betätigungsvorrichtung in Explosionsdarstellung.

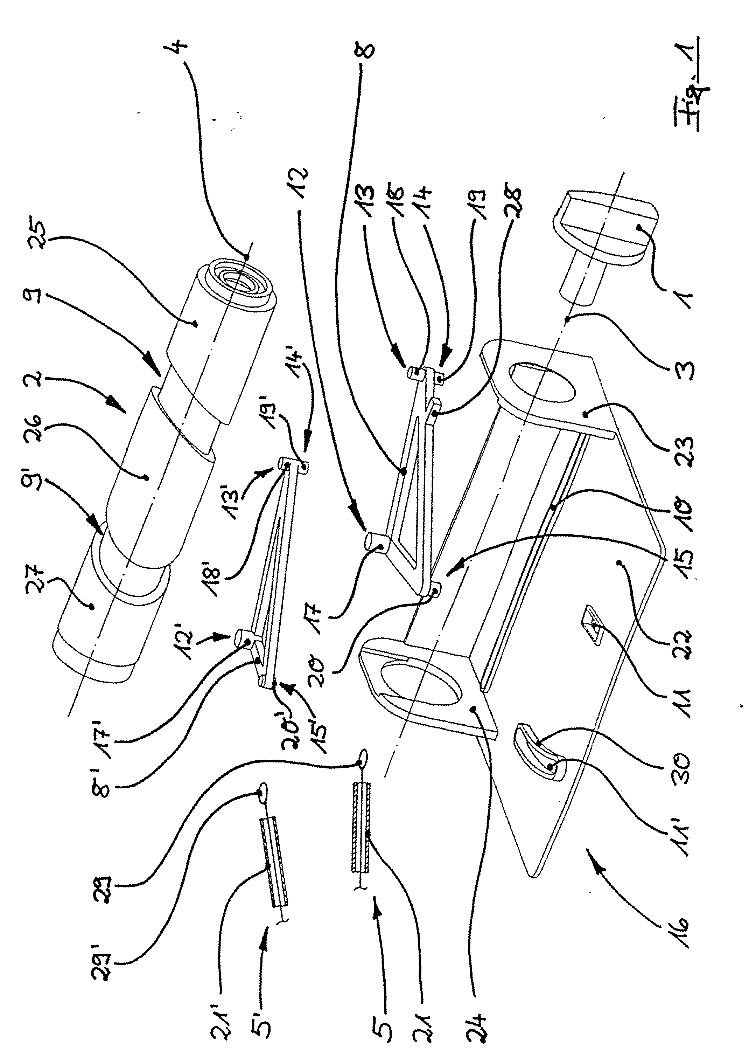

Die in Figur 1 gezeigte Betätigungsvorrichtung weist ein Gehäuse 16 mit einem Boden 22 auf. Eine Verstellwalze 2 ist in als Lagerstelle ausgebildeten seitlichen Gehäusewänden 23, 24 drehbar gehaltert. Die Verstellwalze 2 ist aus mehreren Walzenbauteilen 25, 26 und 27 zusammengesetzt und verklipst. In dem Übergangsbereich zwischen den Walzenbauteilen 25 und 26 ist eine Führung 9 und in dem Übergangsbereich zwischen den Walzenbauteilen 26 und 27 eine Führung 9' jeweils in Form einer Nut ausgebildet. Als Bedienelement zum Verdrehen der Verstellwalze 2 um die Walzenachse 4 ist ein Eingabeelement 1 in Form eines Drehknopfes vorgesehen. Bei der dargestellten Ausführungsform ist die Drehachse 3 des Eingabeelements 1 identisch mit der Walzenachse 4. Es ist aber auch denkbar, die Drehachse des Eingabeelements und die Achse der Verstellwalze durch Zwischenschaltung z. B. eines Zahnradgetriebes parallel (mittels eines Stirnradgetriebes) oder unter einem Winkel (mittels z. B. eines Kegelradgetriebes) zueinander anzuordnen.

Der Boden 22 des Gehäuses 16 weist eine zu der Walzenachse 4 parallele Führung 10 und zwei unter einem Winkel zu dieser Führung 10 angeordnete Führungen 11, 11' auf. Die Führungen 10, 11 und 11' sind Führungsnuten, die in dem Boden 22 des Gehäuses 16 als Ausnehmungen ausgebildet sind und zur Vergrößerung des Kontaktbereichs mit korrespondierenden Führungsstellen von Stellelementen 8, 8' Seitenwandungen 30 besitzen. In die Führung 10 greift eine Führungstelle 14 des Stellelements 8. Eine in die Führung 9 der Verstellwalze 2 greifende Führungsstelle 13 ist achsgleich mit der Führungsstelle 14 an dem Stellelement 8 angeordnet. In der Führung 11, die eine Geradführung ist, wird eine Führungsstelle 15 des Stellelements 8 geführt. Die Führungsstellen 13, 14 und 15 sind jeweils als kreiszylinderförmige Zapfen 18, 19 und 20 ausgebildet. Durch den abgerundeten Querschnitt der Zapfen 18, 19 und 20 wird ein Verkanten oder Klemmen der Führungsstellen in den Führungen vermieden.

Eine Befestigungsstelle 12 für ein Übertragungselement ist als zylindrischer Zapfen 17 ausgebildet. Das Übertragungselement - hier ein Bowdenzug 5 mit einer schlauchförmigen Hülse 21 - weist an seinem einen Ende eine Öse 29 auf, die über den Zapfen 17 legbar ist, womit die Bewegung der Befestigungsstelle 12 des Stellelements 8 auf das Übertragungselement übertragen wird. Ein Anschlag 28 an dem Stellelement 8 bildet einen Endanschlag des Stellelements 8 an dem Gehäuse 16.

Ein weiteres, ebenfalls in der Führung 10 geführtes Stellelement 8' bewegt bei Verdrehung der Verstellwalze 2 einen Bowdenzug 5'. Entsprechend Stellelement 8 weist das Stellelement 8' Führungsstellen 13', 14', 15', die als kreiszylindrische Zapfen 18', 19', 20' ausgebildet sind, auf. Die Führungsstelle 13' wird dabei in der Führung 9' der Verstellwalze 2 geführt und der Zapfen 20' der Führungsstelle 15' in der Kurvenführung 11'. Ein kreiszylindrischer Zapfen 17' bildet eine Befestigungsstelle 12' für einen Bowdenzug 5' mit einer endseitigen Öse 29' und einer schlauchförmigen Hülse 21'. Die Öse 29' wird mit dem Zapfen 17' verbunden.

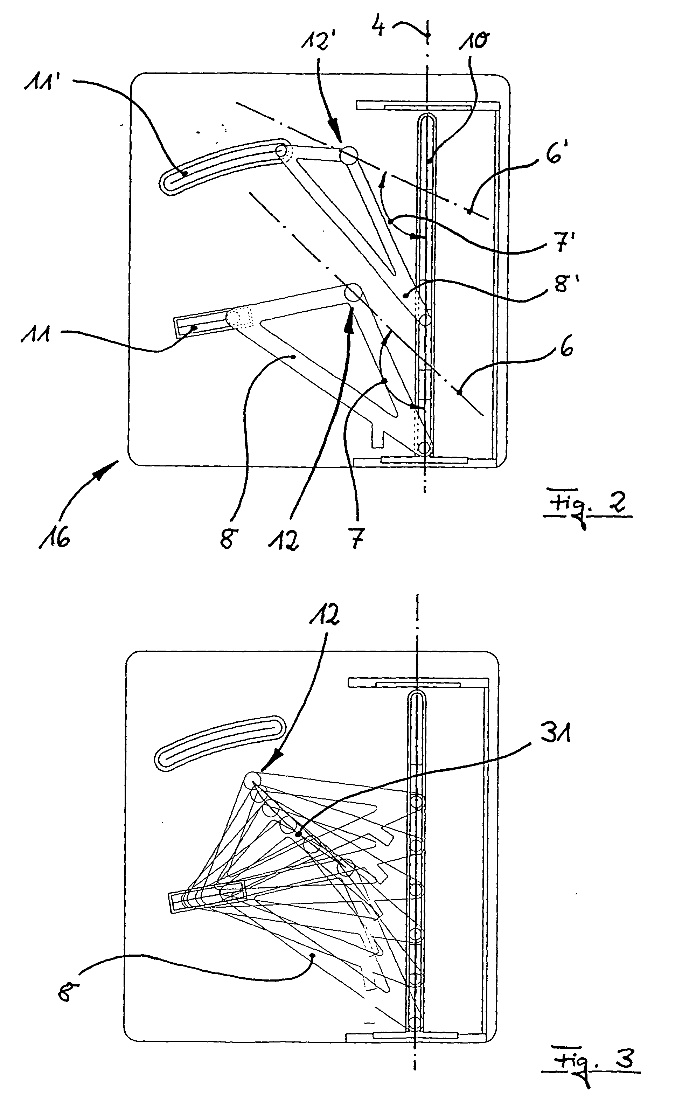

Die Einbaulage der Stellelemente 8 und 8' in den Führungen 10, 11 und 11' des Gehäuses 16 läßt sich aus Figur 2 entnehmen. Die Betätigungsrichtung - und damit die Bewegungsrichtung der Befestigungsstellen 12 bzw. 12' - der hier nicht eingezeichneten Übertragungselemente 5 bzw. 5' ist mit den Bezugszeichen 6 bzw. 6' bezeichnet. Die Betätigungsrichtung 6 weist einen Winkel 7 und die Betätigungsrichtung 6' einen Winkel 7' gegenüber der Führung 10 und der Achse 4 auf.

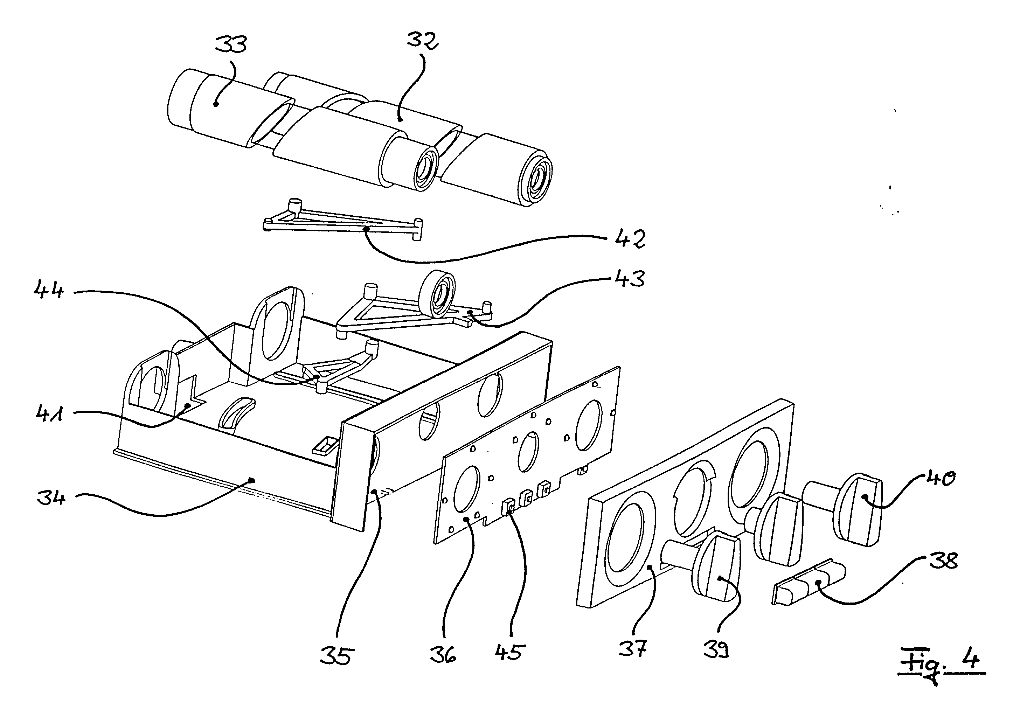

Die Bewegungsbahn 31 der Befestigungsstelle 12 in Abhängigkeit von der Stellung des Stellelements 8 ist in Figur 3 dargestellt. Es ist zu erkennen, daß die Bahn 31 nahezu eine Gerade beschreibt. Dadurch wird das - hier nicht dargestellte - Übertragungselement 5 nahezu linear bewegt, wodurch z. B. keine die Bewegung behindernde Reibung des Bowdenzugs an seiner schlauchartigen Hülse auftritt.

Figur 4 zeigt eine Betätigungsvorrichtung mit zwei Verstellwalzen 32 und 33, die in einem Gehäuse 34 gehaltert sind. Mit einem Drehknopf 40 sind mittels Walze 32 Stellelemente 42 und 43 und mit einem Drehknopf 39 ist mittels Walze 33 ein Stellelement 44 bewegbar. An die Stellelemente 42, 43 und 44 angeschlossen sind - hier nicht dargestellte - Bowdenzüge, die durch eine Ausnehmung 41 aus dem Gehäuse 34 hinausgeführt und mit ebenfalls nicht dargestellten Luftklappen in Luftkanälen verbunden sind. Frontseitig ist das Gehäuse 34 mit einer Blende 37 abgeschlossen, die zusätzlich eine an einer vorderen Gehäusewandung 35 angeordnete Leiterplatte 36 abdeckt. Auf der Leiterplatte 36 angeordnete Druckschalter 45 sind mit Hilfe von Bedienknöpfen 38 betätigbar.

## Patentansprüche

1. Betätigungsvorrichtung, insbesondere für eine Heizungs- und/oder Klimatisierungseinrichtung, insbesondere für ein Fahrzeug, mit einem in einem Gehäuse (16) um eine Achse drehbar gelagerten Eingabeelement (1), einer im Bereich ihrer Mantelfläche eine Führung aufweisenden, durch das Eingabeelement (1) verdrehbaren Verstellwalze (2), einem von der Verstellwalze (2) mittels der Führung (9) in etwa linear bewegbaren Übertragungselement (5) und einem Stellelement (8), wobei das Übertragungselement (5) an einer Befestigungsstelle (12) des Stellelements (8) mit diesem verbindbar ist und das Stellelement (8) mit einer ersten Führungsstelle (13) von der Führung (9) der Verstellwalze (2) führbar ist, **dadurch gekennzeichnet, dass** das Stellelement (8) mit einer zweiten Führungsstelle (14) von einer zu der Achse (4) der Verstellwalze (2) parallelen zweiten Führung (10) und mit einer dritten Führungsstelle (15) von einer zu der zweiten Führung (10) unter einem Winkel angeordneten dritten Führung (11) führbar ist.

2. Betätigungsvorrichtung nach Anspruch 1, **dadurch gekennzeichnet, daß** die zweite Führung (10) und/oder die dritte Führung (11) fest mit dem Gehäuse (16) verbunden ist.

3. Betätigungsvorrichtung nach Anspruch 1 oder 2, **dadurch gekennzeichnet, daß** die Führung (9) der Verstellwalze (2) und/oder die zweite Führung (10) und/oder die dritte Führung (11) eine Führungskante aufweist.

4. Betätigungsvorrichtung nach Anspruch 3, **dadurch gekennzeichnet, daß** die Führung (9) der Verstellwalze (2) und/oder die zweite Führung (10) und/oder die dritte Führung (11) eine Führungsnut ist.

5. Betätigungsvorrichtung nach einem der vorhergehenden Ansprüche,
**dadurch gekennzeichnet, daß** die dritte Führung (11) eine Geradführung ist.

6. Betätigungsvorrichtung nach einem der Ansprüche 1 bis 4, **dadurch gekennzeichnet, daß** die dritte Führung (11') eine Kurvenführung ist.

7. Betätigungsvorrichtung nach einem der vorhergehenden Ansprüche, **dadurch gekennzeichnet, daß** die Bewegungsbahn (31) der Befestigungsstelle (12) für das Übertragungselement eine Gerade ist.

8. Betätigungsvorrichtung nach einem der vorhergehenden Ansprüche, **dadurch gekennzeichnet, daß** das Stellelement (8) starr ist.

9. Betätigungsvorrichtung nach einem der vorhergehenden Ansprüche, **dadurch gekennzeichnet, daß** das Stellelement (8) in etwa eben ist.

10. Betätigungsvorrichtung nach einem der vorhergehenden Ansprüche, **dadurch gekennzeichnet, daß** das Stellelement (8) einen Anschlag (28) aufweist.

11. Betätigungsvorrichtung nach einem der vorhergehenden Ansprüche,
**dadurch gekennzeichnet, daß** die Befestigungsstelle (12) für das Übertragungselement ein in etwa senkrecht auf dem Stellelement (8) angeordneter, einen abgerundeten Querschnitt aufweisender Zapfen (17) ist.

12. Betätigunsvorrichtung nach einem der vorhergehenden Ansprüche,
**dadurch gekennzeichnet, daß** die Befestigungsstelle (12) für das Übertragungselement ein in etwa senkrecht auf dem Stellelement (8) angeordneter Zapfen mit einer in etwa zentrischen Ausnehmung ist.

13. Betätigungsvorrichtung nach einem der vorhergehenden Ansprüche, **dadurch gekennzeichnet, daß** die erste und/oder die zweite und/oder die dritte Führungsstelle (13, 14, 15) des Stellelements (8) ein in etwa senkrecht auf dem Stellelement (8) angeordneter, einen abgerundeten Querschnitt aufweisender Zapfen (18, 19, 20) ist.

14. Betätigungsvorrichtung nach einem der vorhergehenden Ansprüche,
**dadurch gekennzeichnet, daß** die zweite Führungsstelle (14) des Stellelements (8) in einem Abstand von der Befestigungsstelle (12) für das Übertragungselement angeordnet ist.

15. Betätigungsvorrichtung nach einem der vorhergehenden Ansprüche, **dadurch gekennzeichnet, daß** die erste Führungsstelle (13) und die zweite Führungsstelle (14) des Stellelements (8) eine gemeinsame Achse aufweisen.

16. Betätigungsvorrichtung nach einem der vorhergehenden Ansprüche, **dadurch gekennzeichnet, daß** das Übertragungselement ein Bowdenzug (5) ist.

17. Betätigungsvorrichtung nach einem der Ansprüche 1 bis 15, **dadurch gekennzeichnet, daß** das Übertragungselement ein Druckschalter ist.

18. Betätigungsvorrichtung nach einem der Ansprüche 1 bis 15, **dadurch gekennzeichnet, daß** das Übertragungselement ein Schiebepotentiometer ist.

19. Betätigungsvorrichtung nach einem der vorhergehenden Ansprüche, **dadurch gekennzeichnet, daß** die Vorrichtung mehrere Stellelemente (8, 8') aufweist, mittels welcher jeweils ein Übertragungselement (Bowdenzüge 5, 5') bewegbar ist.

20. Betätigungsvorrichtung nach Anspruch 19, **dadurch gekennzeichnet, daß** die Verstellwalze (2) mehrere Führungen (9, 9') aufweist.

21. Betätigungsvorrichtung nach einem der vorhergehenden Ansprüche, **dadurch gekennzeichnet, daß** mindestens zwei Walzenbauteile (25, 26, 27) zu der Verstellwalze (2) zusammensetzbar sind.

22. Betätigungsvorrichtung nach Anspruch 21, **dadurch gekennzeichnet, daß** die Walzenbauteile (25, 26, 27) miteinander verklebbar oder verklipsbar sind.

23. Betätigungsvorrichtung nach Anspruch 21 oder 22, **dadurch gekennzeichnet, daß** die Walzenbauteile (25, 26, 27) zusammenfügbar und unter Spannung in dem Gehäuse (16) halterbar sind.

24. Betätigungsvorrichtung nach einem der vorhergehenden Ansprüche, **dadurch gekennzeichnet, daß** mit der Vorrichtung eine Luftklappe in einem Luftkanal betätigbar ist.

## Claims

1. Actuating arrangement, in particular for a heating and/or air-conditioning system, in particular for a vehicle, having an input element (1) which is mounted in a housing (16) such that it can be rotated about an axis, having an adjusting roller (2) which has a guide in the region of its lateral surface and can be rotated by the input element (1), having a transmission element (5) which can be moved approximately linearly by the adjusting roller (2), by means of the guide (9), and having a setting element (8), it being possible for the transmission element (5) to be connected to the setting element (8) at a fastening location (12) of the latter and for the setting element (8) to be guided, by way of a first guide location (13), by the guide (9) of the adjusting roller (2), **characterized in that** the setting element (8) can be guided, by way of a second guide location (14), by a second guide (10), which is parallel to the axis (4) of the adjusting roller (2), and, by way of a third guide location (15), by a third guide (11), which is arranged at an angle in relation to the second guide (10).

2. Actuating arrangement according to Claim 1, **characterized in that** the second guide (10) and/or the third guide (11) are/is firmly connected to the housing (16).

3. Actuating arrangement according to Claim 1 or 2, **characterized in that** the guide (9) of the adjusting roller (2) and/or the second guide (10) and/or the third guide (11) have/has a guide edge.

4. Actuating arrangement according to Claim 3, **characterized in that** the guide (9) of the adjusting roller (2) and/or the second guide (10) and/or the third guide (11) are/is a guide groove.

5. Actuating arrangement according to one of the preceding claims, **characterized in that** the third guide (11) is a rectilinear guide.

6. Actuating arrangement according to one of Claims 1 to 4, **characterized in that** the third guide (11) is a curved guide.

7. Actuating arrangement according to one of the preceding claims, **characterized in that** the movement path (31) of the fastening location (12) for the transmission element is a straight line.

8. Actuating arrangement according to one of the preceding claims, **characterized in that** the setting element (8) is rigid.

9. Actuating arrangement according to one of the preceding claims, **characterized in that** the setting element (8) is approximately planar.

10. Actuating arrangement according to one of the preceding claims, **characterized in that** the setting element (8) has a stop (28).

11. Actuating arrangement according to one of the preceding claims, **characterized in that** the fastening location (12) for the transmission element is a peg (17) which is arranged approximately vertically on the setting element (8) and has a rounded cross section.

12. Actuating arrangement according to one of the preceding claims, **characterized in that** the fastening location (12) for the transmission element is a peg which is arranged approximately vertically on the setting element (8) and has an approximately central cutout.

13. Actuating arrangement according to one of the preceding claims, **characterized in that** the first guide location and/or the second guide location and/or the third guide location (13, 14, 15) of the setting element (8) are/is a peg (18, 19, 20) which is arranged approximately vertically on the setting element (8) and has a rounded cross section.

14. Actuating arrangement according to one of the preceding claims, **characterized in that** the second guide location (14) of the setting element (8) is spaced apart from the fastening location (12) for the transmission element.

15. Actuating arrangement according to one of the preceding claims, **characterized in that** the first guide location (13) and the second guide location (14) of the setting element (8) have a common axis.

16. Actuating arrangement according to one of the preceding claims, **characterized in that** the transmission element is a Bowden cable (5).

17. Actuating arrangement according to one of Claims 1 to 15, **characterized in that** the transmission element is a press switch.

18. Actuating arrangement according to one of Claims 1 to 15, **characterized in that** the transmission element is a sliding potentiometer.

19. Actuating arrangement according to one of the preceding claims, **characterized in that** the arrangement has a plurality of setting elements (8, 8') which can each move one transmission element (Bowden cable 5, 5').

20. Actuating arrangement according to Claim 19, **characterized in that** the adjusting roller (2) has a plurality of guides (9, 9').

21. Actuating arrangement according to one of the preceding claims, **characterized in that** at least two roller components (25, 26, 27) can be assembled to form the adjusting roller (2).

22. Actuating arrangement according to Claim 21, **characterized in that** the roller components (25, 26, 27) can be adhesively bonded or clipped to one another.

23. Actuating arrangement according to Claim 21 or 22, **characterized in that** the roller components (25, 26, 27) can be joined together and can be secured under stressing in the housing (16).

24. Actuating arrangement according to one of the preceding claims, **characterized in that** the arrangement can be used to actuate an air flap in an air duct.

## Revendications

1. Dispositif de commande, en particulier pour un appareil de chauffage et/ou de climatisation, en particulier pour un véhicule, comprenant un élément d'entrée (1) monté rotatif autour d'un axe dans un boîtier (16), un cylindre de réglage (2) pouvant être tourné par l'élément d'entrée (1) et présentant dans la région de sa surface d'enveloppe un guide, un élément de transition (5) déplaçable approximativement linéairement par le cylindre de réglage (2) au moyen du guide (9) et un élément de réglage (8), l'élément de transition (5) pouvant être raccordé au niveau d'un point de fixation (12) de l'élément de réglage (8) à ce dernier, et l'élément de réglage (8) pouvant être guidé avec un premier point de guidage (13) par le guide (9) du cylindre de réglage (2), **caractérisé en ce que** l'élément de réglage (8) peut être guidé avec un deuxième point de guidage (14) depuis un deuxième guide (10) parallèle à l'axe (4) du cylindre de réglage (2) et avec un troisième point de réglage (15) par un troisième guide (11) disposé suivant un certain angle par rapport au deuxième guide (10).

2. Dispositif de commande selon la revendication 1, **caractérisé en ce que** le deuxième guide (10) et/ou le troisième guide (11) sont raccordés fixement au boîtier (16).

3. Dispositif de commande selon la revendication 1 ou 2, **caractérisé en ce que** le guide (9) du cylindre de réglage (2) et/ou le deuxième guide (10) et/ou le troisième guide (11) présentent une arête de guidage.

4. Dispositif de commande selon la revendication 3, **caractérisé en ce que** le guide (9) du cylindre de réglage (2) et/ou le deuxième guide (10) et/ou le troisième guide (11) sont une rainure de guidage.

5. Dispositif de commande selon l'une quelconque des revendications précédentes, **caractérisé en ce que** le troisième guide (11) est un guide linéaire.

6. Dispositif de commande selon l'une quelconque des revendications 1 à 4, **caractérisé en ce que** le troisième guide (11') est un guide courbe.

7. Dispositif de commande selon l'une quelconque des revendications précédentes, **caractérisé en ce que** la trajectoire de déplacement (31) du point de fixation (12) pour l'élément de transition est une ligne droite.

8. Dispositif de commande selon l'une quelconque des revendications précédentes, **caractérisé en ce que** l'élément de réglage (8) est rigide.

9. Dispositif de commande selon l'une quelconque des revendications précédentes, **caractérisé en ce que** l'élément de réglage (8) est approximativement plan.

10. Dispositif de commande selon l'une quelconque des revendications précédentes, **caractérisé en ce que** l'élément de réglage (8) présente une butée (28).

11. Dispositif de commande selon l'une quelconque des revendications précédentes, **caractérisé en ce que** le point de fixation (12) pour l'élément de transition est un tourillon (17) présentant une section transversale arrondie et disposé approximativement perpendiculairement à l'élément de réglage (8).

12. Dispositif de commande selon l'une quelconque des revendications précédentes, **caractérisé en ce que** le point de fixation (12) pour l'élément de transition est un tourillon disposé approximativement perpendiculairement à l'élément de réglage (8), avec un évidement approximativement central.

13. Dispositif de commande selon l'une quelconque des revendications précédentes, **caractérisé en ce que** le premier et/ou le deuxième et/ou le troisième point de guidage (13, 14, 15) de l'élément de réglage (8) est un tourillon (18, 19, 20) présentant une section transversale arrondie et disposé approximativement perpendiculairement à l'élément de réglage (8).

14. Dispositif de commande selon l'une quelconque des revendications précédentes, **caractérisé en ce que** le deuxième point de guidage (14) de l'élément de réglage (8) est disposé à une certaine distance du point de fixation (12) pour l'élément de transition.

15. Dispositif de commande selon l'une quelconque des revendications précédentes, **caractérisé en ce que** le premier point de guidage (13) et le deuxième point de guidage (14) de l'élément de réglage (8) présentent un axe commun.

16. Dispositif de commande selon l'une quelconque des revendications précédentes, **caractérisé en ce que** l'élément de transition est un câble Bowden (5).

17. Dispositif de commande selon l'une quelconque des revendications 1 à 15, **caractérisé en ce que** l'élément de transition est un interrupteur à pression.

18. Dispositif de commande selon l'une quelconque des revendications 1 à 15, **caractérisé en ce que** l'élément de transition est un potentiomètre à coulisse.

19. Dispositif de commande selon l'une quelconque des revendications précédentes, **caractérisé en ce que** le dispositif présente plusieurs éléments de réglage (8, 8'), au moyen desquels à chaque fois un élément de transition (câbles Bowden 5, 5') peut être déplacé.

20. Dispositif de commande selon la revendication 19, **caractérisé en ce que** le cylindre de réglage (2) présente plusieurs guides (9, 9').

21. Dispositif de commande selon l'une quelconque des revendications précédentes, **caractérisé en ce qu'**au moins deux composants de cylindre (25, 26, 27) peuvent être assemblés pour former le cylindre de réglage (2).

22. Dispositif de commande selon la revendication 21, **caractérisé en ce que** les composants de cylindre (25, 26, 27) peuvent être collés ensemble ou assemblés par encliquetage.

23. Dispositif de commande selon la revendication 21 ou 22, **caractérisé en ce que** les composants de cylindre (25, 26, 27) peuvent être assemblés et retenus par serrage dans le boîtier (16).

24. Dispositif de commande selon l'une quelconque des revendications précédentes, **caractérisé en ce qu'**un volet d'air peut être actionné avec le dispositif dans un canal d'air.
